# EUROPEAN PATENT APPLICATION

(11) **EP 1 857 855 A2**
(43) Date of publication of application: **21.11.2007**
(21) Application number: 07108276.2
(22) Date of filing: 15.05.2007
(51) Int. Cl.: G02B 26/08, G02B 26/10

(54) **Driving device, optical scanning device, and object information detecting device**

(30) Priority: 16.05.2006 JP 2006136843
(71) Applicant: OMRON CORPORATION, Kyoto-shi, Kyoto 600-8530 (JP)
(72) Inventor: Mori, Yoshikazu c/o OMRON Corporation 801, Minamifudodo-cho, Kyoto-shi Kyoto Kyoto 600-8530 (JP); Imamoto, Hiroshi c/o OMRON Corporation 801, Minamifudodo-cho, Kyoto-shi Kyoto Kyoto 600-8530 (JP); Jojoma, Masao c/o OMRON Corporation 801, Minamifudodo-cho, Kyoto-shi Kyoto Kyoto 600-8530 (JP)
(74) Representative: Brykman, Georges

(57) **Abstract**

A driving device includes:a movable frame (7);a frame shaped supporting body (6) arranged on an outer side of the movable frame (7); andbending drive elements (12a, 12b, 12c, 12d) arranged on a surface of the movable frame (7).The supporting body (6) and the movable frame (7) each have two sets of opposing sides. Supporting parts (11a, 11b) arranged on first set of opposing two sides of the supporting body (6) support first set of opposing sides (8a, 8b) of the movable frame (7)The bending drive elements (12a, 12b, 12c, 12d) are arranged on the first set of opposing sides (8a, 8b) of the movable frame (7). A region arranged with the bending drive elements (12a, 12b, 12c, 12d) of the movable frame (7) bends in a thickness direction of the movable frame (7).

## Description

### BACKGROUND OF THE RELATED ART

### 1. Field of the Invention

The present invention relates to an optical scanning device (two dimensional optical scanner) capable of performing two dimensional optical scanning and a driving device used for the same.

### 2. Description of the related art

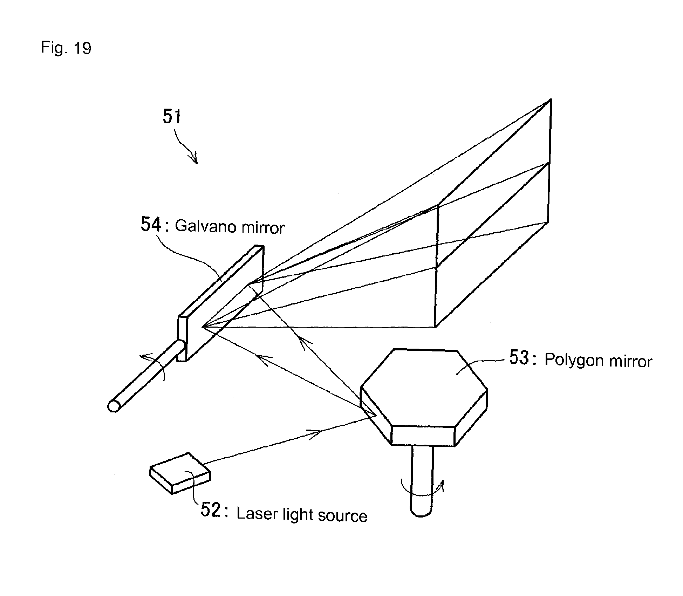

Polygon/galvano mirrors are conventionally widely used as an optical scanning device in optical equipment such as laser printers. FIG. 19 shows a frame format view of a configuration of a conventional optical scanning device 51. The optical scanning device 51 includes a laser light source 52, a polygon mirror 53, and a galvano mirror 54. Laser light exiting from the laser light source 51 is reflected by the polygon mirror 53 that rotates a polyangular column mirror with a motor, and is reflected for scanning by the galvano mirror 54 that rotatably vibrates a plane mirror with an electromagnetic actuator.

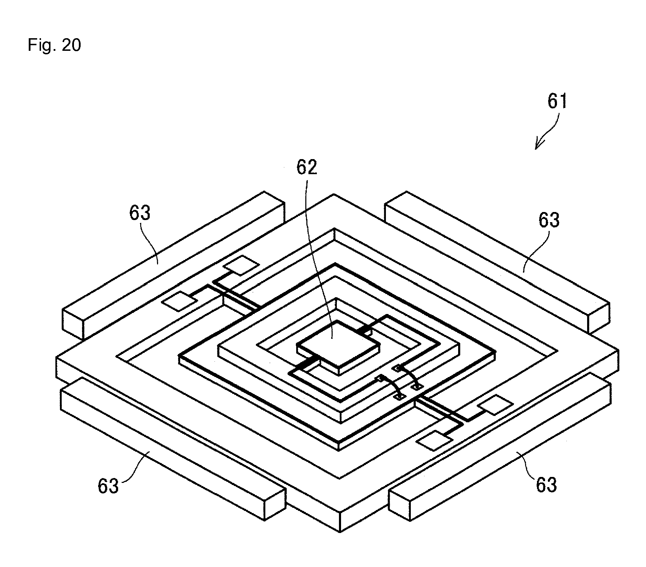

An electromagnetic driven gimbal configuration type micro-optical scanner using the MEMS technique is also widely used. FIG. 20 shows a perspective view of a configuration of a conventional optical scanning device 61. A mirror 62 arranged in the optical scanning device 61 is electromagnetically driven and displaced by permanent magnets 63 arranged on an outer side thereof, so that tilt thereof can be controlled.

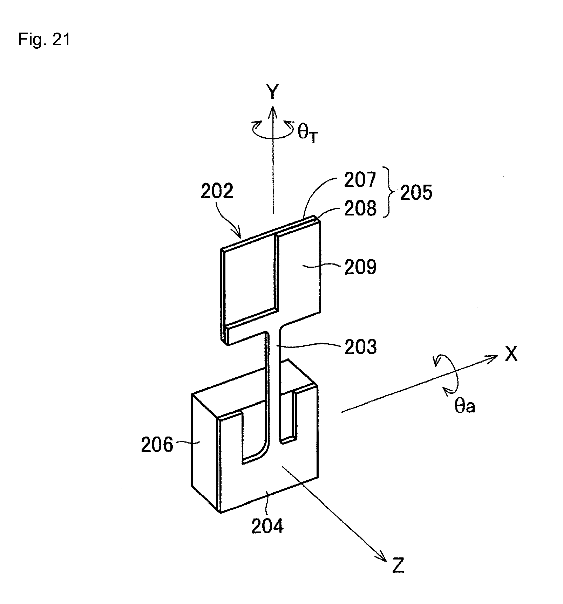

A piezoelectric driven cantilever type micro-optical scanner using the MEMS technique is also known. FIG. 21 shows a perspective view of a configuration of a conventional optical scanner. The optical scanner is configured with a vibrator 202 and a compact driving source 206 that generates microscopic vibration of piezoelectric elements and the like. The vibrator 202 has a vibration input section 204 arranged at one end of an elastic deforming part 203 with two elastic deformation modes of a bending mode θa and a torsional deformation mode θT A scanning section 205 including a mirror supporting part 208 and a mirror part 207 is arranged at the other end.

In the above configuration, the elastic deformation part 203 causes bending vibration and torsional vibration by the vibration from the vibration source 206. Because the elastic deformation part 203 has an inherent resonance vibration mode for bend and for torsion, the vibration having the frequency equal to the two resonant frequencies is generated by the vibration source 206, so that the elastic deformation part 203 resonates at the relevant resonant frequency through the vibration input section 204, and the scanning section 205 turns in the bending direction (θa) and in the torsional direction (θT). Thus, when light is irradiated onto the mirror part 207, the reflected light is scanned two dimensionally.

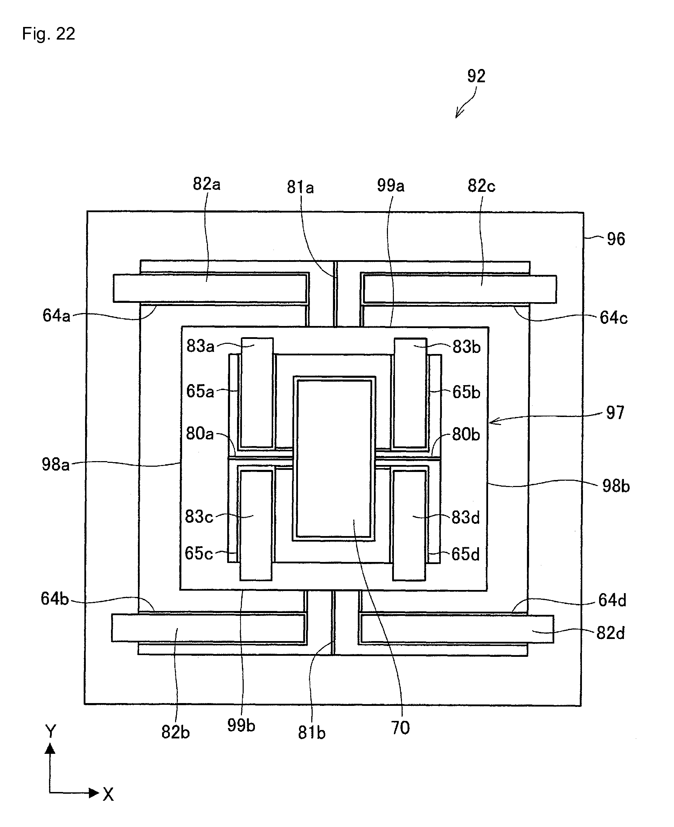

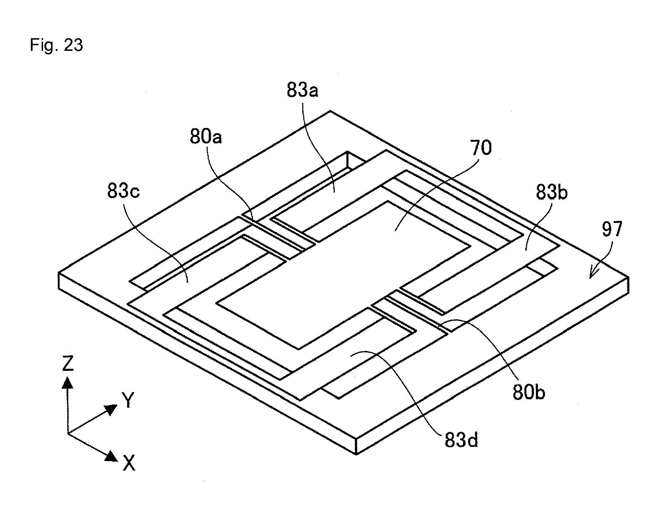

A piezoelectric driven gimbal configuration type micro-optical scanner using the MEMS technique is also known (refer to, for example, Japanese Patent Application Laid-Open No. 2005-148459 (published on June 9, 2005)). FIG. 22 shows a plan view of a configuration of a conventional optical scanning device 92, and FIG. 23 shows a perspective view of main parts thereof.

The optical scanning device 92 includes a frame shaped supporting substrate 96. A frame shaped movable frame 97 is arranged on an inner side of the supporting substrate 96. The movable frame 97 includes side members 98a, 98b and side members 99a, 99b that face each other, respectively. The movable frame 97 is supported by torsion bars 81 a, 81 b arranged on the supporting substrate 96 and connected to the side members 99a, 99b, respectively. A mirror 70 is arranged on an inner side of the movable frame 97. The mirror 70 is supported by torsion bars 80a, 80b arranged on the movable mirror 97.

Vibration plates 65a, 65b, 65c, and 65d connected to the mirror 70 are arranged on the movable frame 97. Piezoelectric elements 83a, 83b, 83c, and 83d are formed on each vibration plate 65a, 65b, 65c, and 65d. Vibration plates 64a, 64b, 64c, and 64d connected to the movable frame 97 are arranged on the supporting substrate 96. Piezoelectric elements 82a, 82b, 82c, and 82d are formed on each vibration plate 64a, 64b, 64c, and 64d.

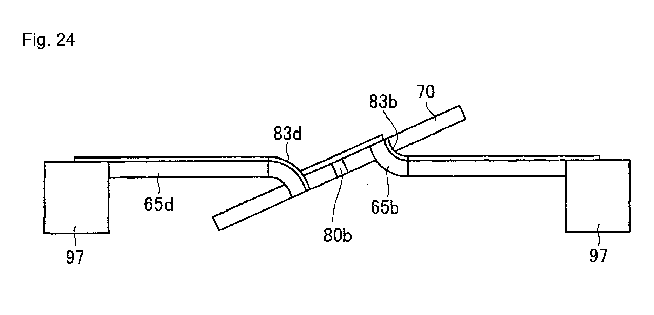

FIG. 24 shows a frame format view for describing operation of the conventional optical scanning device 92. When voltage is applied and the piezoelectric elements 83a and 83b are contracted in the Y axis direction, the vibration plates 65a, 65b bend respectively towards the piezoelectric element 83a, 83b sides. When voltage is applied and the piezoelectric elements 83c and 83d are extended in the Y axis direction, the vibration plates 65c, 65d bend respectively towards the sides opposite the piezoelectric element 83c, 83d. In consequence, torsional deformation occurs on the torsion bars 80a, 80b supporting the mirror 70, whereby the mirror 70 turns and tilts with the torsion bars 80a, 80b as the center.

However, because the conventional configuration shown in FIG. 19 is a mechanical configuration driven by the motor and the electromagnetic actuator, miniaturization and higher speed are limited. In performing a two dimensional optical scan, a configuration in which the polygon mirror and the galvano mirror are combined is generally used. However, optical adjustment is very difficult because the mirrors must be accurately positioned and arranged so that the scanning directions become orthogonal to each other in order to perform an accurate two dimensional optical scan.

Furthermore, the size of the device increases because the permanent magnets 63 and the yoke must be arranged on an outer side of the mirror 62 in the conventional configuration shown in FIG. 20. The amount of current must be increased to obtain large displacement of the mirror 62, and thus an optical scanner of lower power consumption becomes difficult to configure.

In the conventional configuration shown in FIG. 21, the torsion bar is arranged at a position shifted from the center of the mirror, so that bending mode and torsional mode are simultaneously excited to enable a two dimensional optical scan when the piezoelectric body is driven, where the center of the mirror part cannot always maintain a constant position, and the precision of the optical scan may not be very high as turning is not carried out with the torsion bar axis as the center for the bending mode. The mechanical stress concentrates on the one torsion bar, and the torsion bar easily breaks because bending vibration and torsional vibration are performed with one torsion bar.

The optical scanner having the conventional configuration shown in FIGS. 22 to 24 is an optical scanner of torsional driven type having the torsion bar based on the gimbal configuration as the rotation axis, but the rigidity of the torsion bar must be lowered to obtain displacement of the mirror in such torsional drive, and thus is likely to break in view of practical use to in-vehicle laser radar or barcode reader that is likely to be subjected to disturbance such as influence of G and impulse excitation. Furthermore, sufficient displacement amount of the mirror may not be obtained if the rigidity of the optical scanner is increased.

### SUMMARY

In one or more embodiments, the present invention provides a driving device and an optical scanning device (optical scanner) that excels in resistance to impact while ensuring the displacement amount.

In accordance with one aspect of the present invention, a driving device includes: a movable frame; a frame shaped supporting body arranged on an outer side of the movable frame; and bending drive elements arranged on a surface of the movable frame; wherein the supporting body and the movable frame each has two sets of opposing two sides; supporting parts arranged on first opposing two sides of the supporting body support first opposing two sides of the movable frame; bending drive elements are arranged on the first opposing two sides of the movable frame; and a region arranged with the bending drive elements of the movable frame bends in a thickness direction of the movable frame.
In accordance with one aspect of the present invention, a driving device includes: a movable frame; a frame shaped supporting body arranged on an outer side of the movable frame; an inner movable frame arranged on an inner peripheral side of the movable frame; bending drive elements arranged on a surface of the movable frame; and inner bending drive elements arranged on a surface of the inner movable frame; wherein the supporting body, the movable frame, and the inner movable frame each has two sets of opposing two sides, first supporting parts arranged on second opposing two sides of the supporting body support second opposing two sides of the movable frame; second supporting parts arranged on first opposing two sides of the movable frame support first opposing two sides of the inner movable frame; the bending drive elements are arranged on the second opposing two sides of the movable frame; the inner bending drive elements are arranged on the first opposing two sides of the inner movable frame; a region arranged with the bending drive elements of the movable frame bends in a thickness direction of the movable frame; and a region arranged with the inner bending drive elements of the inner movable frame bends in a thickness direction of the inner movable frame.

The driving device according to one aspect of the present invention includes bending drive elements arranged on the movable frame to bending deform the opposing two sides of the movable frame in the direction perpendicular to the surface of the movable frame, and thus the rigidity of the supporting parts for supporting the movable frame is enhanced, and the impact resistance of the driving device is enhanced.

The optical scanning device according to one embodiment of the present invention includes the driving device according to the present invention and the driven body arranged on an inner peripheral side of the movable frame and supported by the movable frame, and the driven body is supported by a pair of supporting parts arranged on the other opposing two sides of the movable frame, whereby the tilt of the driven body can be controlled by the displacement of the movable frame.

The object information detecting device according to one or more embodiments of the present invention is equipped with the driving device according to the present invention, and thus the rigidity of the supporting parts for supporting the movable frame of the driving device is enhanced, and the impact resistance of the object information detecting device is enhanced.

### BRIEF DESCRIPTION OF THE DRAWINGS

FIG. 1 shows a frame format view of a configuration of an object information detecting device according to Embodiment 1;
FIG. 2 shows a plan view of a configuration of a driving device arranged in the object information detecting device;
FIGS. 3A and 3B show frame format views of a cross section taken along a plane DD of FIG. 2 for describing operation of the driving device;
FIG. 4 shows a frame format view describing operation of a movable frame and a mirror of the driving device;
FIGS. 5A and 5B show frame format views of an end face taken along an X axis direction for describing the operation of the driving device;
FIG. 6 shows a perspective view for describing the operation of the movable frame and the mirror of the driving device;
FIG. 7 shows a perspective view for describing the operation of the movable frame and the mirror of the driving device;
FIG. 8 shows a perspective view for describing the operation of the movable frame and the mirror of the driving device;
FIG. 9A shows a frame format cross sectional view for describing an unimorph drive of the driving device, and FIG. 9B shows a frame format cross sectional view for describing a bimorph drive of the driving device;
FIG. 10A shows a perspective view for describing the unimorph drive of the driving device, and FIG. 10B shows a perspective view for describing the bimorph drive of the driving device;
FIG. 11 shows a plan view of a configuration of a driving device according to Embodiment 2;
FIG. 12 shows an end face view taken along a plane BB of FIG. 11;
FIG. 13 shows an end face view taken along a plane CC of FIG. 11;
FIG. 14 shows a view of a conventional torsional driven gimbal configuration type optical scanner having a torsion bar as the rotating axis to compare with the present embodiments;
FIG. 15 shows a frame format perspective view of a configuration of a laser printer according to Embodiment 3;
FIGS. 16A and 16B show frame format views of an end face taken along a Y axis direction for describing operation of a driving device according to Embodiment 4;
FIGS. 17A and 17B show frame format views of an end face taken along an X axis direction for describing the operation of the driving device;
FIG. 18 shows a frame format view of a configuration of an optical disc head according to Embodiment 4;
FIG. 19 shows a frame format view of a configuration of an optical scanning device of the conventional art;
FIG. 20 shows a perspective view of a configuration of another optical scanning device of the conventional art;
FIG. 21 shows a perspective view of a configuration of another further optical scanning device of the conventional art;
FIG. 22 shows a plan view of a configuration of another further optical scanning device of the conventional art;
FIG. 23 shows a perspective view of a configuration of another further optical scanning device of the conventional art; and
FIG. 24 shows a frame format view for describing operation of another further optical scanning device of the conventional art.

### DETAILED DESCRIPTION

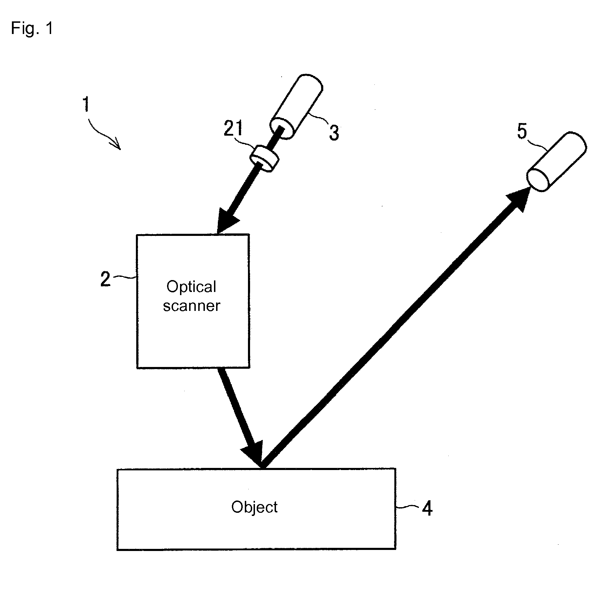

Embodiments of the present invention will now be described with reference to FIGS. 1 to 18.

### (Embodiment 1)

FIG. 1 shows a frame format view of a configuration of an object information detecting device 1 according to Embodiment 1. The object information detecting device 1 includes a light source 3 for irradiating laser light, a lens group 21 for passing the laser light irradiated by the light source 3, an optical scanning device (optical scanner 2) for reflecting the laser light passed through the lens group 21, and an optical sensor 5 for receiving the laser light from the optical scanner 2 reflected by an object 4.

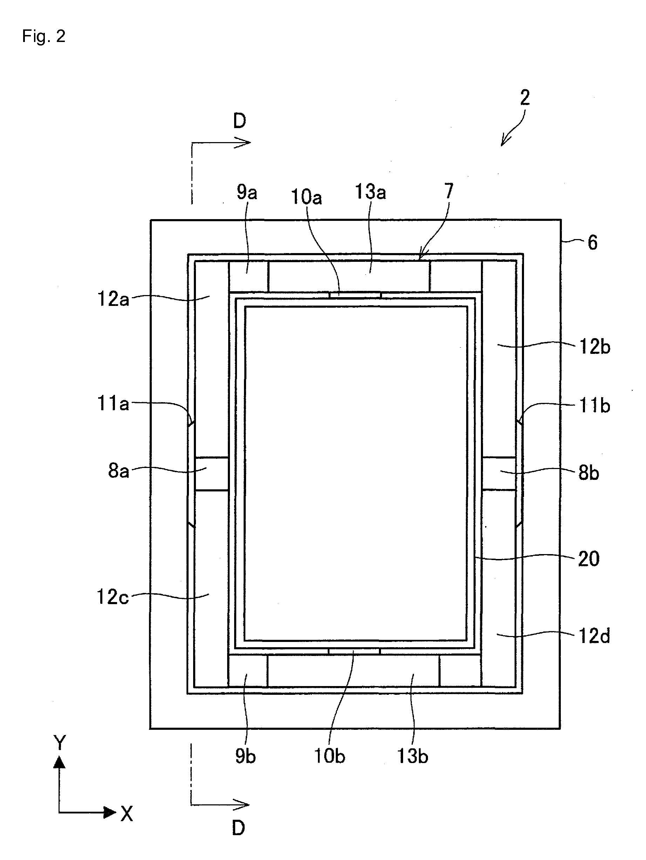

FIG. 2 shows a plan view of a configuration of the optical scanner 2. The optical scanner 2 includes a frame shaped supporting substrate 6. A frame shaped movable frame 7 is formed along the inner periphery of the supporting substrate 6. The movable frame 7 includes side members 8a, 8b and side members 9a, 9b that face each other, respectively. The movable frame 7 is supported by supporting parts 11 a, 11 a arranged on an inner peripheral side of the supporting substrate 6 and connected to the side members 8a, 8b, respectively. A square shaped mirror 20 is arranged along the inner periphery of the movable frame 7. The mirror 20 is supported by supporting parts 10a, 10b arranged at the central parts of the side members 9a, 9b of the movable frame 7.

A piezoelectric element 12a is arranged at one end side of the side member 8a of the movable frame 7, and a piezoelectric element 12c is arranged at the other end side. A piezoelectric element 12b is arranged at one end side of the side member 8b, and a piezoelectric element 12d is arranged on the other end side. A piezoelectric element 13a is arranged at the middle of the side member 9a of the movable frame 7, and a piezoelectric element 13b is arranged at the middle of the side member 9b.

The mirror 20, the supporting parts 10a, 10b, the movable frame 7, the supporting parts 11 a, 11 b, and the supporting substrate 6 are integrally formed by performing an etching process on the silicon substrate. In the etching process, a gap between the mirror 20 and the movable frame 7, and a gap between the movable frame 7 and the supporting substrate 6 are simultaneously formed so that the mirror 20 and the movable frame 7 can be easily driven at a predetermined displacement angle.

A reflective film made of metal thin film such as gold (Au) or aluminum (Al) is formed on a surface of the mirror 20 to enhance the reflectivity of the incident light. Each of the above etching processed components is thinner than the supporting substrate 6 to be easily bendably deformed. Each piezoelectric element 12a, 12b, 12c, 12d, 13a, and 13b is configured by stacking a lower electrode, a piezoelectric material, and an upper electrode on the movable frame 7 in such order. The lower electrode, the piezoelectric material, and the upper electrode are stacked by a film forming method such as CVD, sputtering, and deposition prior to the etching process of the silicon substrate, and the piezoelectric elements 12a, 12b, 12c, 12d, 13a, and 13b are formed by performing pattern processing by wet or dry etching.

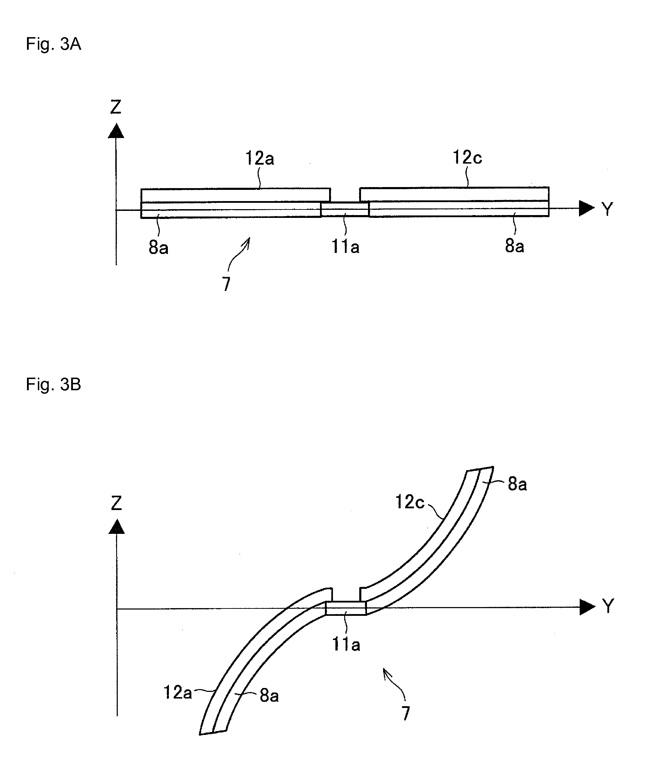

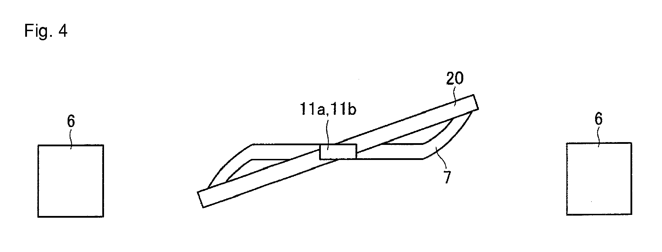

FIGS. 3A and 3B show frame format views of a cross section taken along a cross section DD for describing operation of the optical scanner 2. FIG. 4 shows a frame format view for describing operation of the movable frame 7 and the mirror 20 of the optical scanner 2.

The portion corresponding to the piezoelectric element 12a on the side member 8a and the portion corresponding to the piezoelectric element 12b on the side member 8b respectively bend toward the sides opposite the piezoelectric elements 12a, 12b along a thickness direction of the movable frame 7 with the supporting parts 11 a, 11 b as the supporting points when the piezoelectric elements 12a, 12b are applied with AC voltage of the same phase and extended in the Y axis direction.

The portion corresponding to the piezoelectric element 12c on the side member 8a and the portion corresponding to the piezoelectric element 12d on the side member 8b bend respectively towards the piezoelectric elements 12c, 12d sides along the thickness direction of the movable frame 7 when the piezoelectric elements 12c, 12d are applied with AC voltage having a reversed phase or shifted phase of the AC voltage applied to the piezoelectric elements 12a, 12b and contracted in the Y axis direction. As a result, the side members 9a, 9b arranged with the supporting parts 10a, 10b for supporting the mirror 70 displace in opposite directions to each other, and the mirror 20 tilts.

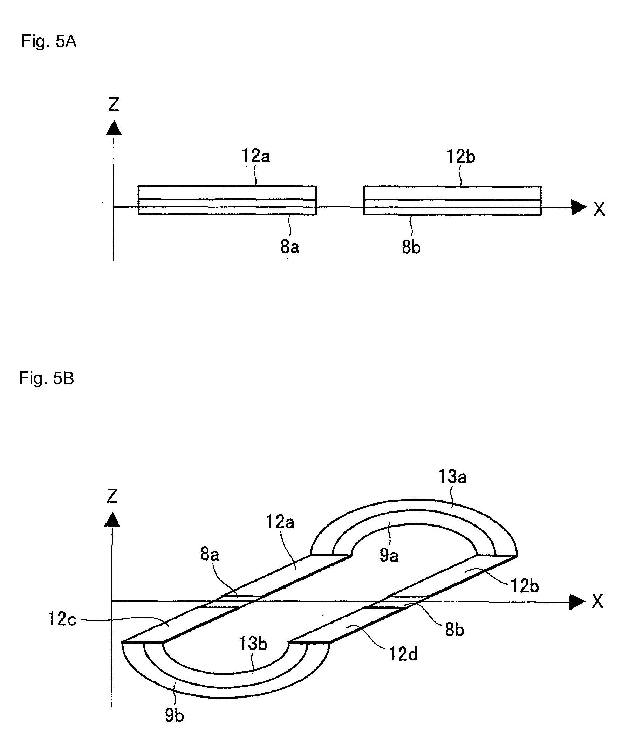

FIGS. 5A and 5B show frame format views of an end face taken along the X axis direction for describing the operation of the optical scanner 2.

When the piezoelectric element 13a is applied with AC voltage and extended in the X axis direction, the side member 9a deflects towards the Z axis direction with the connecting points with the side members 8a, 8b as the supporting points. When the piezoelectric element 13b is applied with AC voltage having reversed phase or shifted phase of the AC voltage applied to the piezoelectric element 13a and contracted in the X axis direction, the side member 9b deflects towards the -Z axis direction with the connecting points with the side members 8a, 8b as the supporting points.

Therefore, the displacement amount of the movable frame 7 for supporting the mirror 20 can be increased by arranging the piezoelectric elements 13a, 13b that extend and contract in the X axis direction in addition to the piezoelectric elements 12a, 12b, 12c, and 12d that extend and contract in the Y axis direction.

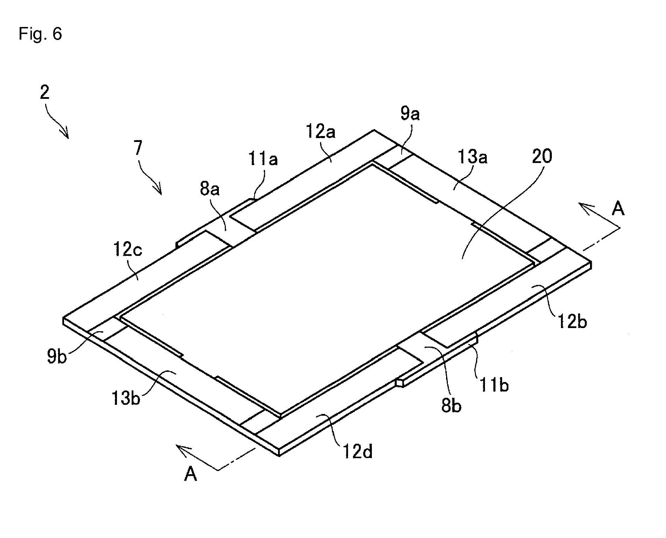

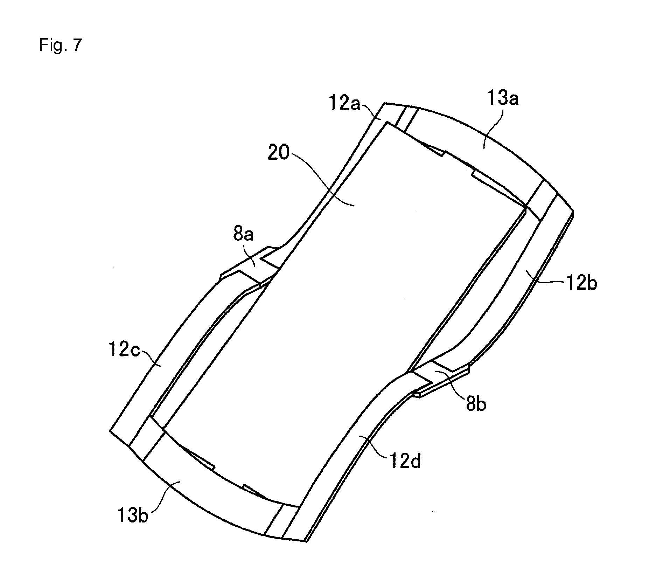

FIGS. 6 to 8 show perspective views describing the operations of the movable frame 7 and the mirror 20 of the optical scanner 2. The supporting substrate 6 is not shown in order to simplify the illustration. First, when voltage is applied to each piezoelectric element such that the piezoelectric elements 12a, 12b are contracted, the piezoelectric element 13a is extended, the piezoelectric elements 12c, 12d are extended and the piezoelectric element 13b is contracted from the state in which the movable frame 7 is not bendably deformed as shown in FIG. 6. Displacement caused by bending deformation of the movable frame 7 occurs as shown in FIG. 7, and the mirror 20 supported by the movable frame 7 tilts.

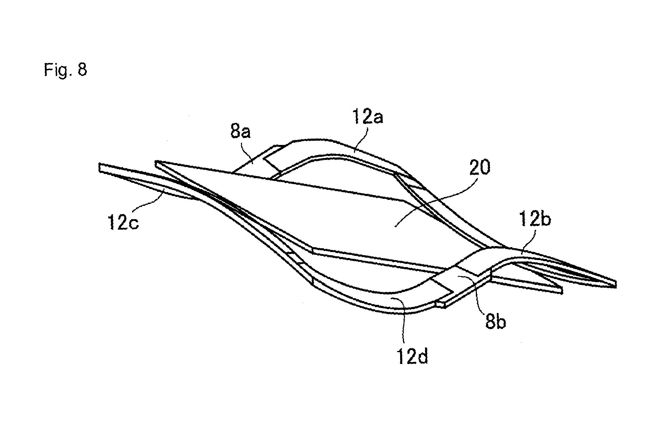

As opposed to FIG. 7, when voltage is applied to each piezoelectric element such that the piezoelectric elements 12a, 12b are extended, the piezoelectric element 13a contracts, the piezoelectric elements 12c, 12d are contracted, and the piezoelectric element 13b extended, displacement in the opposite direction by the bending deformation in the opposite direction of the movable frame 7 occurs as shown in FIG. 8 through the state shown in FIG. 6, and the mirror 20 supported by the movable frame 7 tilts in the opposite direction. When AC voltage is applied to the piezoelectric elements, the operations in the order of FIG. 6, FIG. 7, FIG. 6, and FIG. 8 are repeated and the piezoelectric elements are driven.

The torsional drive of obtaining the displacement of the mirror with the torsion bar as the turning axis such as the gimbal configuration type optical scanner is performed in the conventional art, whereas the driving method is changed in the present embodiment to the bending drive of obtaining the displacement of the mirror by bending the movable frame supported by the supporting parts. The width of the supporting parts becomes wider than the width of the torsion bar of the conventional art by changing the driving method to the bending drive method, and thus the rigidity increases. Furthermore, the piezoelectric elements are arranged on the movable frame to bend the movable frame. In order to prevent the displacement amount of the mirror from decreasing due to increase in rigidity of the supporting parts arranged on the optical scanner, the displacement amount of the mirror is increased by film forming the piezoelectric element on two sides of the X axis and the Y axis of the movable frame and utilizing the bending drive in two directions. The piezoelectric element 13a (reinforcement bending drive element) is arranged on the movable frame 7, and is arranged in the region on the side member 9a connected to the supporting part 10a for supporting the mirror 20 arranged on an inner side of the movable frame 7 arranged with the piezoelectric element 13a. The piezoelectric element 13b (reinforcement bending drive element) is also arranged on the movable frame 7, and is arranged in the region on the side member 9b connected to the supporting part 10b for supporting the mirror 20.

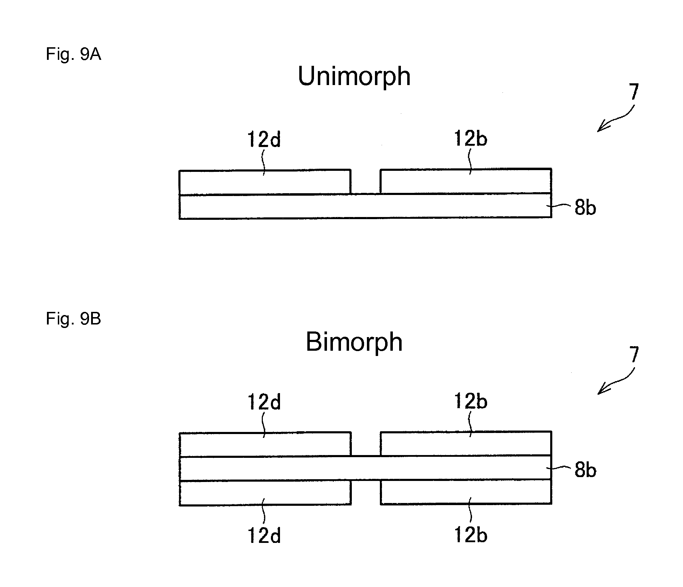

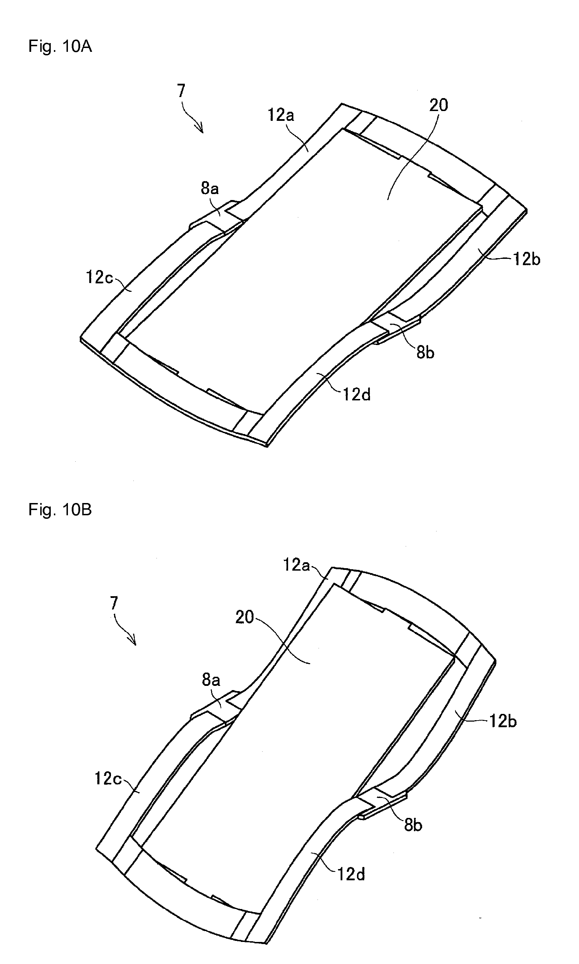

FIG. 9A shows a frame format cross sectional view for describing a unimorph drive of the optical scanner, and FIG. 9B shows a frame format cross sectional view for describing a bimorph drive of the optical scanner. FIG. 10A shows a perspective view for describing the unimorph drive of the optical scanner, and FIG. 10B shows a perspective view for describing the bimorph drive of the optical scanner.

The piezoelectric elements 12b, 12d and the like may be arranged on a surface of the side member 8b etc., or may be arranged on both a front surface and a back surface of the side member 8b etc. The driving method in which the piezoelectric element is arranged only on one surface of the side member is referred to as the unimorph driving method, and the driving method in which the piezoelectric element is arranged on both the front surface and the back surface is referred to as the bimorph driving method. As shown in FIGS. 10A and 10B, greater displacement amount is obtained with the bimorph driving method than with the unimorph driving method.

According to the bimorph driving method, the displacement amount of the mirror becomes twice the displacement amount by the unimorph drive if the driving voltage is the same. In the bimorph driving method, it is difficult to film form the piezoelectric element on a back surface of the movable frame, and it is also difficult to form wirings on the back surface.

### (Embodiment 2)

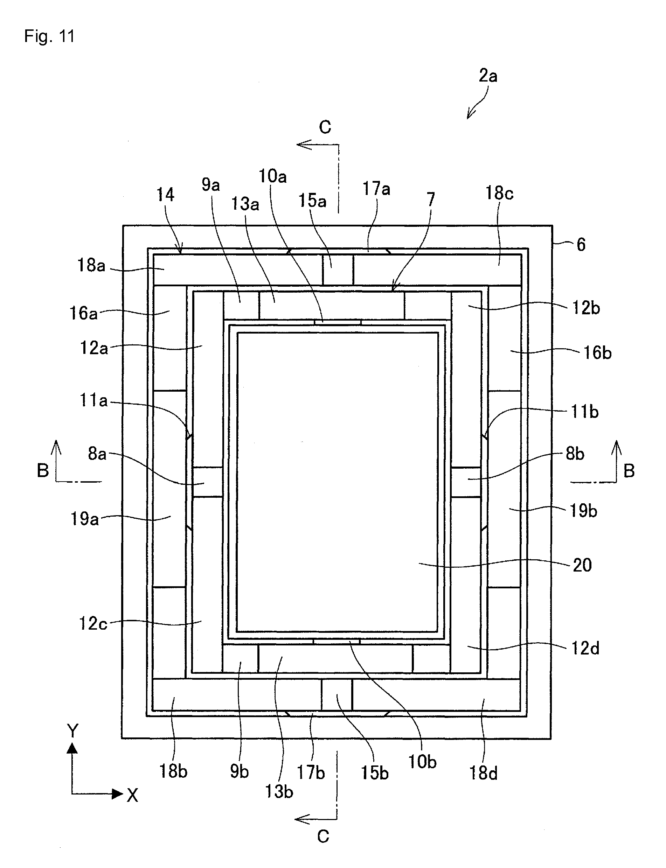

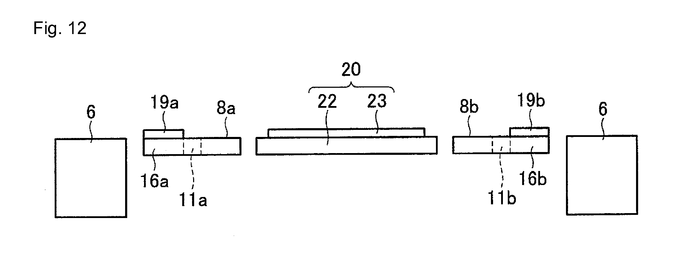

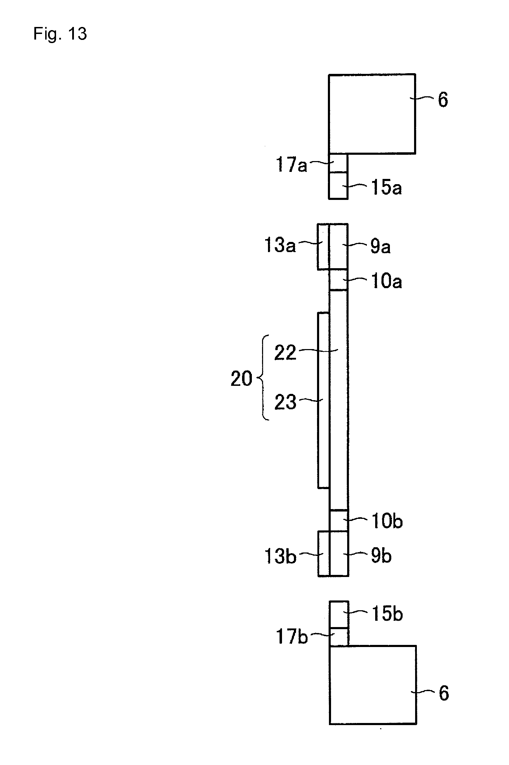

FIG. 11 shows a plan view of a configuration of an optical scanner 2a according to Embodiment 2. FIG. 12 shows an end face view taken along a plane BB of FIG. 11. FIG. 13 shows an end face view taken along a plane CC of FIG. 11. The same reference numbers are used to denote components that are the same as the components of the optical scanner 2 described above with reference to FIGS. 2 to 10, and the detailed description thereof is omitted.

The optical scanner 2a includes an outer movable frame 14 formed into a frame shape along the inner periphery of the supporting substrate 6. The outer movable frame 14 includes side members 15a, 15b and side members 16a, 16b that face each other, respectively. The outer movable frame 14 is supported by supporting parts 17a, 17b arranged on the inner peripheral side of the supporting substrate 6 and connected to the central part of the side members 15a, 15b. The supporting parts 17a, 17b are formed at the central parts of the opposing side members arranged on the supporting substrate 6.

The outer movable frame 14 includes side members 15a, 15b and side members 16a, 16b that face each other, respectively. The frame shaped movable frame 7 is formed along the inner periphery of the outer movable frame 14. The outer movable frame 14 includes supporting parts 11 a, 11b for supporting the movable frame 7. The supporting parts 11 a, 11 b are formed at the central parts of inner side surfaces of the side members 16a, 16b.

A piezoelectric element 18a is arranged at one end side of the side member 15a of the outer movable frame 14, and a piezoelectric element 18c is arranged on the other end side. A piezoelectric element 18b is arranged at one end side of the side member 15b, and a piezoelectric element 18d is arranged on the other end side. A piezoelectric element 19a is arranged on an outer side of the supporting part 11 a at the middle of the side member 16a of the outer movable frame 14, and a piezoelectric element 19b is arranged on the outer side of the supporting part 11 b at the middle of the side member 16b.

The movable frame 7 includes side members 8a, 8b and side members 9a, 9b that face each other, respectively. A square shaped mirror 20 is arranged along the inner periphery of the movable frame 7. The mirror 20 is supported by supporting parts 10a, 10b arranged at the central part of the side members 9a, 9b of the movable frame 7.

A piezoelectric element 12a is arranged at one end side of the side member 8a of the movable frame 7, and a piezoelectric element 12c is arranged on the other end side. A piezoelectric element 12b is arranged at one end side of the side member 8b, and a piezoelectric element 12d is arranged on the other end side. A piezoelectric element 13a is arranged on the outer side of the supporting part 10a at the middle of the side member 9a of the movable frame 7, and a piezoelectric element 13b is arranged on the outer side of the supporting part 10b at the middle of the side member 9b.

Therefore, the piezoelectric element 13a (reinforcement bending drive element) is arranged on the movable frame 7, and is arranged in the region on the side member 9a connected to the supporting part 10a for supporting the mirror 20 arranged on the inner side of the movable frame 7 arranged with the piezoelectric element 13a. The piezoelectric element 13b (reinforcement bending drive element) is also arranged on the movable frame 7, and is arranged in the region on the side member 9b connected to the supporting part 10b for supporting the mirror 20.

Moreover, the piezoelectric element 19a (outer reinforcement bending drive element) is arranged on the outer movable frame 14, and is arranged in the region on the side member 16a connected to the supporting part 11 a for supporting the movable frame 7 arranged on an inner side of the outer movable frame 14 arranged with the piezoelectric element 19a. The piezoelectric element 19b (outer reinforcement bending drive element) is also arranged on the outer movable frame 14, and is arranged in the region on the side member 16b connected to the supporting part 11 b for supporting the movable frame 7.

The mirror 20, the supporting parts 10a, 10b, the movable frame 7, the supporting parts 11 a, 11 b, the outer movable frame 14, the supporting parts 17a, 17b and the supporting substrate 6 are integrally formed by performing etching process on the silicon substrate. In the etching process, a gap between the mirror 20 and the movable frame 7, a gap between the movable frame 7 and the outer movable frame 14, and a gap between the outer movable frame 14 and the supporting substrate 6 are simultaneously formed so that the mirror 20, the movable frame 7, and the outer movable frame 14 can be easily driven at a predetermined displacement angle.

A reflective film 23 made of metal thin film such as gold (Au) or aluminum (Al) is formed on a surface of the base 22 of the mirror 20 to enhance the reflectivity of the incident light. Each of the above etching processed components is thinner than the thickness of the supporting substrate 6, as shown in FIGS. 12 and 13 to be easily bendably deformed. Each piezoelectric element 18a, 18b, 18c, 18d, 19a, and 19b is configured by stacking a lower electrode, a piezoelectric material, and an upper electrode on the outer movable frame 14 in such order. The lower electrode, the piezoelectric material, and the upper electrode are stacked through film forming methods such as CVD, sputtering, and deposition prior to the etching process of the silicon substrate, and the piezoelectric elements 18a, 18b, 18c, 18d, 19a, and 19b are formed by performing pattern processing through wet or dry etching.

Therefore, the gimbal configuration of supporting substrate - movable frame - mirror is changed to a gimbal configuration of supporting substrate - outer movable frame - movable frame - mirror in which another movable frame is added to perform two dimensional scanning at bending drive, in Embodiment 2.

The optical scanner 2a configured as above can be applied to a two dimensional optical scanner since the mirror 20 is not only tilted along the Y axis direction by the movable frame 7, but the mirror 20 can also be tilted in the X axis direction by the outer movable frame 14.

The movable frame 7 is vibrated by applying AC voltage (e.g. sine wave) of the same phase to the piezoelectric elements 12a, 12b, and 13b and of reversed phase or shifted phase to the piezoelectric elements 12c, 12d, and 13a. Because one end of the piezoelectric elements 12a, 12b, 12c, and 12d are supported by the supporting parts 11a, 11 b, the piezoelectric elements 12a, 12b, 12c, and 12d arranged on the side members 8a, 8b parallel to the Y axis on the movable frame 7 bending vibrate up and down in a thickness direction of the substrate. Furthermore, because both ends of the piezoelectric elements 13a, 13b are supported by respective both ends of the side members 8a, 8b, the piezoelectric elements 13a, 13b arranged on the side members 9a, 9b parallel to the X axis on the movable frame 7 bending vibrate up and down in the thickness direction of the substrate. However, phase difference is created between the vibrations of the piezoelectric elements 12a, 12b, 13b and the piezoelectric elements 12c, 12d, 13a. In particular, the directions of bending vibration between the piezoelectric elements 12a, 12b, 13b and the piezoelectric elements 12c, 12d, 13a become directly opposite to each other when the phases of the applied voltage are reversed phases with each other.

In other words, when the piezoelectric elements 12a, 12b are contracted in the Y axis direction and the region arranged with the piezoelectric elements 12a, 12b on the side members 8a, 8b bend towards the piezoelectric elements 12a, 12b sides with the supporting parts 11 a, 11 b as the supporting points, the piezoelectric elements 12c, 12d are extended in the Y axis direction and the region arranged with the piezoelectric elements 12a, 12b on the side members 8a and 8b bend towards the sides opposite the piezoelectric elements 12c, 12d with the supporting parts 11 a, 11 b as the supporting points. Thus, the side members 8a and 8b includes a region that bends in an upward direction (Z direction) and a region that bends in the downward direction (-Z direction) with the supporting parts 11 a, 11 b as the center. The side member 9a connected at both ends to the region that bends in the upward direction of the side members 8a and 8b bends in the upward direction with the central part arranged with the piezoelectric element 13a as the inflection point, and the side member 9b connected at both ends to the region that bends in the downward direction of the side members 8a and 8b bend in the downward direction with the central part arranged with the piezoelectric element 13b as the inflection point. According to such a driving method, the bending displacement of the side members 9a and 9b in the X axis direction and the bending displacement of the side members 8a and 8b in the Y axis direction on the movable frame 7 are combined, and the mirror 20 that is elastically supported by the movable frame 7 by way of the supporting parts 10a, 10b also tilts greatly in the Y axis direction following the operation of the movable frame 7. As each piezoelectric element 12a, 12b, 12c, 12d, 13a, and 13b repeats bending vibration in the up and down direction of the substrate following AC voltage, the movable frame 7 and the mirror 20 elastically supported by the movable frame 7 by way of the supporting parts 10a, 10b repeat the turning vibration up to a predetermined displacement angle with the opposing supporting parts 11 a, 11 b as the center axis based on the principle described above.

According to a similar principle, when AC voltage is applied to the piezoelectric elements 18a, 18b, 18c, 18d, 19a, and 19b, the outer movable frame 14 tilts with the opposing supporting parts 17a, 17b as the center axis. Furthermore, the movable frame 7 elastically supported by the outer movable frame 14 by way of the supporting parts 11a, 11 b, and the mirror 20 elastically supported by the movable frame 7 by way of the supporting parts 10a, 10b also tilt following the outer movable frame 14. As each piezoelectric element 18a, 18b, 18c, 18d, 19a, and 19b repeats bending vibration in the up and down direction of the substrate following AC voltage, the outer movable frame 14, the movable frame 7 elastically supported by the outer movable frame 14 by way of the supporting parts 11 a, 11 b, and the mirror 20 elastically supported by the movable frame 7 by way of the supporting parts 10a, 10b also repeat the turning vibration up to the predetermined displacement angle with the opposing of the supporting parts 17a, 17b as the center axis based on the principle described above. The outer movable frame 14 and the movable frame 7 turning vibrate in directions orthogonal to each other by simultaneously applying AC voltage to the piezoelectric elements arranged on the movable frame 7 and the piezoelectric elements arranged on the outer movable frame 14, whereby the reflected light of the light entering to a reflecting surface of the mirror 20 is scanned two dimensionally.

The turning vibration of the mirror 20 becomes a maximum, and a maximum displacement angle is obtained when the driving frequency of the piezoelectric elements 12a, 12b, 12c, 12d, 13a, and 13b is the same as or close to the mechanical resonance frequency of a configuration combining the mirror 20, the supporting parts 10a, 10b, the movable frame 7, and the supporting parts 11a, 11b.

Similarly, the turning vibration of the mirror 20 becomes a maximum, and a maximum displacement angle is obtained when the driving frequency of the piezoelectric elements 18a, 18b, 18c, 18d, 19a, and 19b is the same as or close to the mechanical resonance frequency of a configuration combining the mirror 20, the supporting parts 10a, 10b, the movable frame 7, the supporting parts 11 a, 11 b, the outer movable frame 14, and the supporting parts 17a, 17b.

The two-dimensional optical scanner of Embodiment 2 drives the movable frame 7 and the outer movable frame 14 with piezoelectric elements of two independent systems, and thus the driving frequency is not limited, and the problem of interference between two turning vibrations in the orthogonal directions is less likely to occur.

The piezoelectric elements can be collectively formed on the optical scanner and a compact optical scanner can be obtained because the piezoelectric material is directly film formed on the structure integrally formed from the silicon substrate to form the piezoelectric element.

Silicon is set for the substrate configuring the two dimensional optical scanner 2a, and PZT is set for the piezoelectric material. The overall size of the piezoelectric element has width of 14mm, length of 18mm, thickness of the supporting substrate of 0.5mm, and thickness other than the supporting substrate of 0.14mm; and the mirror size has width of 7mm, length of 11 mm, thickness of 0.14mm, and thickness of the piezoelectric material (PZT) of 1µm.

Eigenvalue analysis was performed on the optical scanner 2a, and it was found that the primary resonance frequency is 1 kHz, the driving resonance frequency of the inner movable frame 7 is 1.6kHz, and the driving resonance frequency of the middle movable frame 14 is 1.4kHz. G was then applied to the optical scanner to analyze the impact resistance, and it was found that up to 4000G can be withstood.

The voltage of 10Vp-p of the same phase and sine wave bias of 1.6kHz were applied to the piezoelectric elements 12a, 12b, and 13b, and the voltage of 10Vp-p of reversed phase of the above phase and sine wave bias of 1.6kHz were applied to the piezoelectric elements 12c, 12d, and 13a to attempt bending vibration of the movable frame 7. As a result, a displacement angle of the mirror 20 of ±8deg was obtained in the Y axis direction.

Similarly, voltage of 10Vp-p of the same phase and sine wave bias of 1.4kHz were applied to the piezoelectric elements 18a, 18b, and 19b, and the voltage of 10Vp-p of reversed phase of the above phase and sine wave bias of 1.4kHz were applied to the piezoelectric elements 18c, 18d, and 19a to attempt bending vibration of the outer movable frame 14. As a result, a displacement angle of the mirror 20 of ±14deg was obtained in the X axis direction.

When the movable frame 7 and the outer movable frame 14 are simultaneously resonantly driven under the above conditions, the movable frame 7 and the outer movable frame 14 were found to resonantly drive independently.

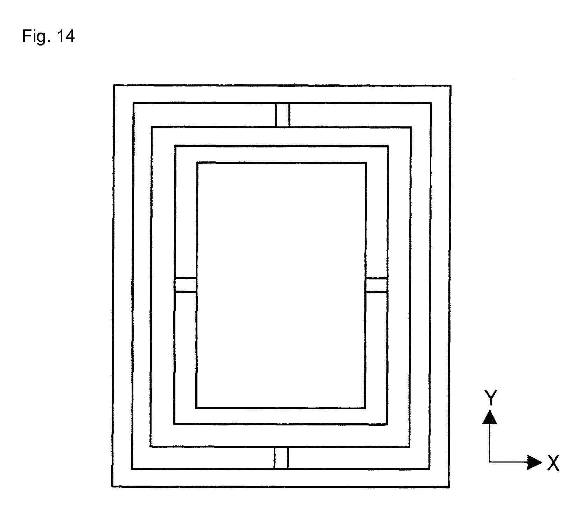

The torsional driven gimbal configuration type optical scanner having the torsion bar as the rotation axis of the conventional art shown in FIG. 14 is simulated to compare with the optical scanner 2a according to the present embodiment. The material of the substrate, the overall size of the piezoelectric elements, the mirror size and the movable frame width are set to be the same as those of the optical scanner 2a of Embodiment 2. The width of the torsion bar is adjusted so that the displacement angle of the mirror of ±8deg in the Y axis direction and ±14 deg in the X axis direction is obtained at the voltage of 10Vp-p.

G was applied to the conventional torsional driven gimbal configuration type optical scanner shown in FIG. 14 to analyze the impact resistance, and found that only up to 700G could be withstood. If the width of the torsion bar is adjusted so that the resistance to impact of the conventional torsional driven gimbal configuration type optical scanner is 4000G, which is the same as the present embodiment, the sine wave bias of 60Vp-p must be applied to drive the mirror in the Y axis direction for ±8 deg and 140Vp-p to drive the mirror in the X axis direction for ±14 deg.

Therefore, the two dimensional optical scanner 2a of Embodiment 2 has a configuration of high rigidity in which the resistance to impact is 4000G, and a large displacement angle of the mirror is obtained even at low voltage drive by combining the driving frequency of the piezoelectric elements of the two systems respectively to the mechanical resonance frequencies of the movable frame 7 and the outer movable frame 14, and using the three piezoelectric bending drives facing one another with the supporting parts as the axis on the same movable frame.

The performance of the conventional optical scanning device 92 previously described in FIGS. 22 to 24 and the performance of the scanner 2a of Embodiment 2 will now be compared. In the conventional optical scanning device 92 and the scanner 2a of Embodiment 2, configuration designing was performed with the overall size, the mirror size, and the length of the supporting parts (length of the beam connecting the vibration plate and the mirror/movable frame in the conventional optical scanning device 92), the width of the movable frame/vibration plate, the width of the piezoelectric material, and the thickness of the piezoelectric material standardized, and the width of the supporting beam as the parameter.

In the case of the conventional optical scanning device 92, the width of the supporting beam (supporting part) is obtained so that the X axis driving voltage becomes the lowest because the X axis driving voltage is higher than the Y axis driving voltage, and the X axis driving voltage, the Y axis driving voltage, and the impact resistance at the time are shown in the table 1 below. In the case of the optical scanner 2a of the present embodiment, the width of the supporting beam (supporting part) is obtained so that the Y axis driving voltage becomes the lowest because the Y axis driving voltage is higher than the X axis driving voltage, and the X axis driving voltage, the Y axis driving voltage, and the impact resistance at the time are shown in the table 1 below.

**Table 1**

| | Conventional art | Present embodiment |
|---|---|---|
| Ratio of width of supporting beam | 1 | 12 |
| Mirror scanning angle (X axis) | ± 10 deg | ± 10 deg |
| X axis driving voltage (V) | ± 14.4 V | ± 3.6 V |
| Mirror scanning angle (Y axis) | ± 10 deg | ± 10 deg |
| Y axis driving voltage (V) | ± 5.7 V | ± 6.1 V |
| Impact resistance (G) | 1450 G | 4000 G |

As shown in (Table 1), the Y axis driving voltage of the mirror is substantially the same in the conventional optical scanning device 92 and in the optical scanner 2a of Embodiment 2, but the X axis driving voltage and the impact resistance of the mirror are significantly better in the optical scanner 2a of Embodiment 2 than in the conventional optical scanning device 92.

In the optical scanner 2a of Embodiment 2, the displacement in the X axis direction of the mirror 20 is twice in the configuration in which the piezoelectric elements 19a, 19b are arranged for piezoelectric reinforcement than that of the configuration in which the piezoelectric elements 19a, 19b are not arranged. The displacement in the Y axis direction of the mirror 20 is 1.4 times in the configuration in which the piezoelectric elements 13a, 13b are arranged for piezoelectric reinforcement than that of the configuration in which the piezoelectric elements 13a, 13b are not arranged.

### (Embodiment 3)

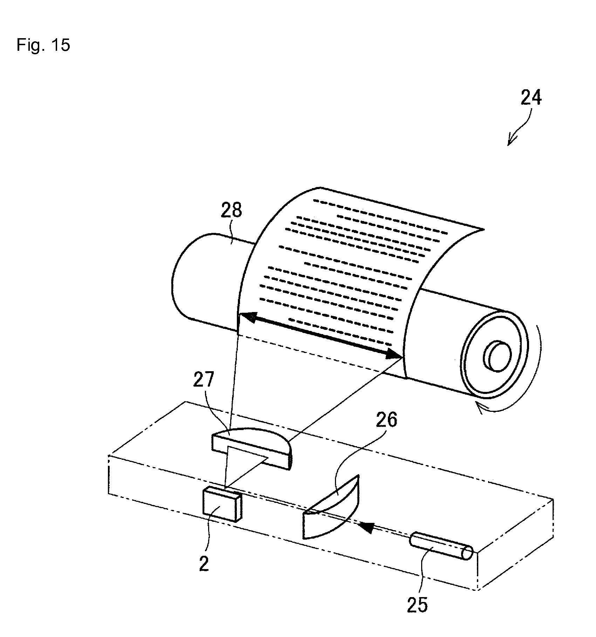

FIG. 15 shows a frame format perspective view of a configuration of a laser printer 24 according to Embodiment 3. The laser printer 24 includes a light source 25 for irradiating laser light. The laser light irradiated by the light source 25 passes through a cylindrical lens 26.

The laser printer 24 includes the optical scanner 2a described above in Embodiment 2. The optical scanner 2a reflects the laser light that has passed through the cylindrical lens 26. The laser light reflected by the optical scanner 2a passes through an fθ lens 27 towards the photosensitive drum 28. The paper wound around the photosensitive drum 28 is printed by the laser light passed through the fθ lens 27.

The optical scanner 2a according to the present invention may thus be used in laser printers.

### (Embodiment 4)

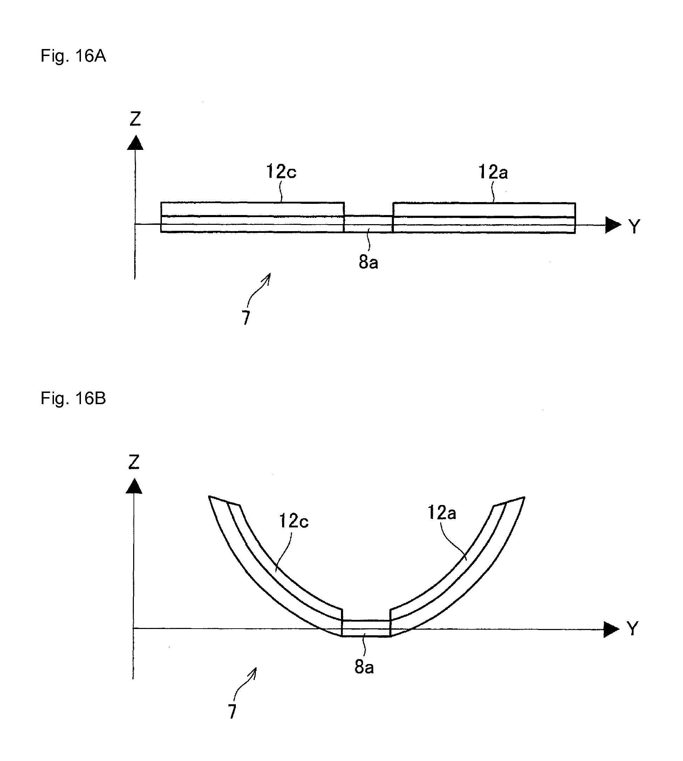

FIGS. 16A and 16B show frame format views of an end face taken along the Y axis direction for describing operation of an optical scanner according to Embodiment 4. The configuration of the optical scanner of Embodiment 4 is the same as the configuration of the optical scanner 2a described above in Embodiment 2. The same reference characters are used to denote components that are the same as the components described above in Embodiment 1 with reference to FIGS. 3A and 3B, and FIGS. 5A and 5B. The detailed description of such components is omitted.

The portion corresponding to the piezoelectric element 12a on the side member 8a and the portion corresponding to the piezoelectric element 12b on the side member 8b bend respectively towards the piezoelectric elements 12a, 12b sides along the thickness direction of the movable frame 7 with the supporting parts 11 a, 11 b as the supporting points when the piezoelectric elements 12a, 12b are applied with AC voltage and contracted in the Y axis direction.

The portion corresponding to the piezoelectric element 12c on the side member 8a and the portion corresponding to the piezoelectric element 12d on the side member 8b bend respectively towards the piezoelectric elements 12c, 12d sides along the thickness direction of the movable frame 7 when the piezoelectric elements 12c, 12d are applied with AC voltage and contracted along the Y axis direction. Consequently, the side members 9a, 9b arranged with the supporting parts 10a, 10b for supporting the mirror 70 both displace in the same Z axis direction, and thus the mirror 20 moves parallel in the Z axis direction.

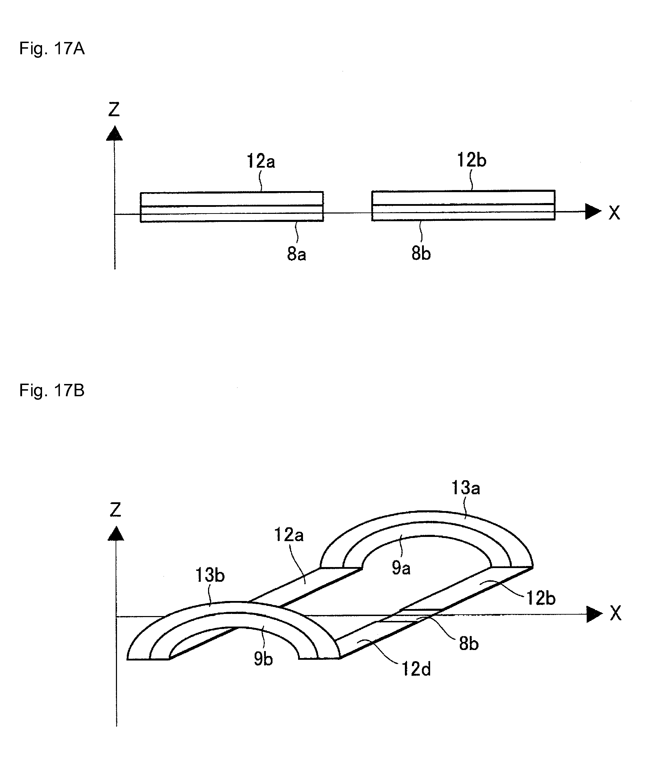

FIGS. 17A and 17B show frame format views of an end face taken along the X axis direction for describing the operation of the optical scanner.

When the piezoelectric element 13a is applied with AC voltage and extended along the X axis direction, the side member 9a deflects towards the Z axis direction with the connecting points with the side members 8a, 8b as the supporting points. When the piezoelectric element 13b is applied with AC voltage and extended along the X axis direction, the side member 9b deflects towards the Z axis direction with the connecting points with the side members 8a, 8b as the supporting points.

Therefore, the amount of displacement of the movable frame 7 supporting the mirror 20 increases by arranging the piezoelectric elements 13a, 13b that extend and contract in the X axis direction in addition to the piezoelectric elements 12a, 12b, 12c, and 12d that extend and contract in the Y axis direction.

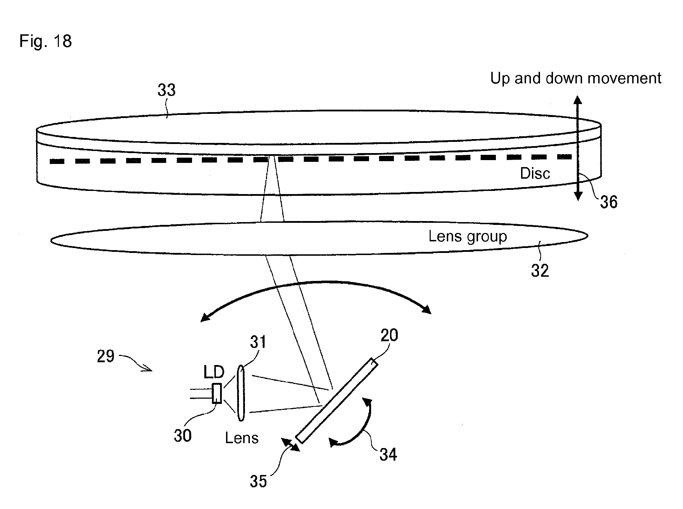

FIG. 18 shows a frame format view of a configuration of an optical disc head 29 according to Embodiment 4. The optical disc head 29 includes a laser diode 30. The laser diode 30 irradiates the laser light towards the lens 31. The laser light transmitted through the lens 31 is reflected by the mirror 20 arranged in the optical scanner according to Embodiment 4, transmitted through the lens group 32, and irradiated onto the optical disc 33.

The optical scanner according to Embodiment 4 is not only tilt adjustable in the direction indicated by an arrow 34 but is also focus adjustable in the direction indicated by an arrow 35, and thus an appropriate focusing on a surface of the optical disc 33 is achieved even if the surface of the optical disc 33 moves in the direction of an arrow 36 by focus adjusting the mirror 20 in the direction of the arrow 35.

The optical scanner according to Embodiment 4 not only has a two dimensional optical scanning function, but can also perform one dimensional optical scanning while focusing. That is, if DC voltage of the same phase is applied to the piezoelectric elements 18a, 18b, 18c, and 18d, DC voltage of reversed phase is applied to the piezoelectric elements 19a and 19b, and the piezoelectric elements 12a, 12b, 12c, 12d, 13a, and 13b are resonantly driven as described in Embodiment 2, uniaxial optical scanning can be performed by the resonant drive of the movable frame 7 while focusing with the outer movable frame 14.

When DC voltage of ±10V is applied to the piezoelectric elements 18a, 18b, 18c, and 18d, and the DC voltage of reversed phase is applied to the piezoelectric elements 19a and 19b, it is recognized through simulation that focusing of ±3µm is performed in the Z axis direction (vertical direction in plane of paper) and optical scanning of ±8 deg in the Y axis direction per voltage of 10Vp-p is performed with the resonant drive of the movable frame 7.

This method can be applied to the optical mirror of the optical disc drive, where the laser light exiting from the semiconductor laser is irradiated on the mirror 20 of the present embodiment, and the pit of the optical disc 33 is scanned by vibrating the mirror 20, and furthermore, the slight out-of-focus that occurs from the position of the pit can be focused.

In addition, if the galvano mirror used in the scanning laser microscope is replaced with the present embodiment, the focusing function is provided in addition to the conventional uniaxial optical scanning, and is also suited for miniaturization.

An example of driving the mirror with the piezoelectric elements has been described in each of the above embodiments, but the present invention is not limited thereto. For instance, the mirror may be driven by one of electromagnetic driving method, electrostatic driving method, shape memory alloy driving method, or bi-metal driving method.

The present invention is not limited to the above respective embodiments, and various modifications may be made within the scope of the claims, and the embodiments obtained by appropriately combining the technical means disclosed in the different embodiments are also encompassed in the technical scope of the present invention.

The present invention can be applied to an optical scanning device (two dimensional optical scanner) capable of two dimensional optical scanning that is used in optical scanning of optical sensor and laser applied equipment and that is compact and operates at high speed and a driving device used therefor, and for example, is applicable to laser printer, optical disc head, and scanning laser microscope.

## Claims

1. A driving device comprising:
a movable frame (7);
a frame-shaped supporting body (6) arranged an the outer side of the movable frame (7); and
bending drive elements (12a, 12b, 12c, 12d) arranged on a surface of the movable frame (7); **characterized in that**
the supporting body (6) and the movable frame (7) each have two sets of opposing sides;
supporting parts (11 a, 11 b) arranged on a first set of opposing two sides of the supporting body (6) support first set of opposing sides (8a, 8b) of the movable frame (7);
the bending drive elements (12a, 12b, 12c, 12d) are arranged on the first opposing two sides (8a, 8b) of the movable frame (7) ; and
a region arranged with the bending drive elements (12a, 12b, 12c, 12d) of the movable frame (7) bends in a thickness direction of the movable frame (7).

2. A driving device comprising:
an outer movable frame (14);
a frame-shaped supporting body (6) arranged on an outer side of the outer movable frame (14)
an inner movable frame (7) arranged on an inner peripheral side of the outer movable frame (14);
outer bending drive elements (18a, 18b, 18c, 18d) arranged on a surface of the outer movable frame (14); and
inner bending drive elements (12a, 12b, 12c, 12d) arranged on a surface of the inner movable frame (7); **characterized in that**
the supporting body (6), the outer movable frame (14), and the inner movable frame (7) each have two sets of opposing sides,
first supporting parts (17a, 17b) arranged on a second set of opposing two sides of the supporting body (6) support a second set of opposing two sides (15a, 15b) of the outer movable frame (14);
second supporting parts (11a, 11b) arranged on a first set of opposing sides (16a, 16b) of the outer movable frame (14) support a first set of opposing sides (8a, 8b) of the inner movable frame (7);
the outer bending drive elements (18a, 18b, 18c, 18d) are arranged on the second set of opposing sides (15a, 15b) of the outer movable frame (14);
the inner bending drive elements (12a, 12b, 12c, 12d) are arranged on the first set of opposing sides (8a, 8b) of the inner movable frame (7);
a region arranged with the outer bending drive elements (18a, 18b, 18c, 18d) of the outer movable frame (14) bends in a thickness direction of the outer movable frame (14); and
a region arranged with the inner bending drive elements (12a, 12b, 12c, 12d) of the inner movable frame (7) bends in a thickness direction of the inner movable frame (7).

3. A driving device according to claim 1, further comprising:
reinforcement bending drive elements (13a, 13b) arranged on the movable frame (7); **characterized in that**
the reinforcement bending drive elements (13a, 13b) are arranged on a second set of opposing sides (9a, 9b) of the movable frame (7); and
a region arranged with the reinforcement bending drive elements (13a, 13b) of the movable frame (7) bends.

4. A driving device according to claim 2, further comprising:
reinforcement bending drive elements (13a, 13b) arranged on the movable frame (7); **characterized in that**
the reinforcement bending drive elements (13a, 13b) are arranged on the second set of opposing sides (9a, 9b) of the movable frame (7); and
a region arranged with the reinforcement bending drive elements (13a, 13b) of the movable frame (7) bends.

5. A driving device according to claim 4, **characterized in that** the outer bending drive elements (18a, 18b, 18c, 18d) and the reinforcement bending drive elements (13a, 13b) are piezoelectric elements.

6. A driving device according to claim 3, **characterized in that** the bending drive elements (12a, 12b, 12c, 12d) and the reinforcement bending drive elements (13a, 13b) are piezoelectric elements.

7. A driving device according to claim 1, further comprising:
a driven body (20) arranged on an inner side of the driving device;
**characterized in that**
third supporting parts (10a, 10b) arranged on a second set of opposing sides (9a, 9b) of the movable frame (7) support the driven body (20); and
the driven body (20) tilts when the movable frame (7) bends.

8. A driving device according to claim 2, further comprising:
a driven body (20) arranged on an inner peripheral side of the driving device; **characterized in that**
third supporting parts (10a, 10b) arranged on the second set of opposing sides (9a, 9b) of the movable frame (7) support the driven body (20); and
the driven body (20) tilts when the outer movable frame (14) and the inner movable frame (7) bend.

9. A driving device according to claim 7 or 8, **characterized in that** the driven body (20) has a mirror surface.

10. An object information detecting device (1) comprising:
a driving device according to claim 7 or 8;
a light source (3) for irradiating laser light to the driven body (20): and
a light receiving sensor (5) for receiving light from the light source (3);
**characterized in that**
the driven body (20) has a mirror surface;
the light source (3) is arranged so that exit laser light is directed towards a measuring object (4) after being reflected by the mirror surface;
light reflected by the mirror surface is reflected by the measuring object (4); and
the light receiving sensor (5) is arranged at a position of receiving light reflected by the measuring object.
